(19) Europäisches Patentamt
European Patent Office
Office européen des brevets

(11) **EP 3 203 267 B1**

(12) **FASCICULE DE BREVET EUROPEEN**

(45) Date de publication et mention
de la délivrance du brevet:
**26.09.2018 Bulletin 2018/39**

(51) Int Cl.:
***G01S 19/23*** *(2010.01)*

(21) Numéro de dépôt: **17152739.3**

(22) Date de dépôt: **24.01.2017**

(54) **METHODE DE CALIBRAGE D'UN RECEPTEUR DE RADIO-NAVIGATION PAR SATELLITES**

KALIBRIERMETHODE EINES SATELLITEN-FUNKNAVIGATIONSEMPFÄNGERS

METHOD FOR CALIBRATING A SATELLITE RADIONAVIGATION RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2016 FR 1600197**

(43) Date de publication de la demande:
**09.08.2017 Bulletin 2017/32**

(73) Titulaire: **Thales**
**92400 Courbevoie (FR)**

(72) Inventeurs:
• **CARRIE, Guillaume**
**31100 Toulouse (FR)**
• **VAUTHERIN, Benoît**
**31100 Toulouse (FR)**
• **SERANT, Damien**
**31100 Toulouse (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**US-A1- 2004 234 016**

• **DREHER ACHIM ET AL: "Compact Adaptive Multi-antenna Navigation Receiver", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 septembre 2012 (2012-09-21), pages 917-925, XP056008409,**

**EP 3 203 267 B1**

**Description**

L'invention concerne le domaine des récepteurs de radio-navigation par satellites, encore appelés récepteurs GNSS de l'acronyme anglo-saxon couramment utilisé « Global Navigation Satellite Systems », et plus précisément les récepteurs multi-antennes comprenant plusieurs voies de réception. L'invention concerne également le domaine du traitement des signaux à spectre étalé qui englobent les signaux de radio-navigation par satellite.

L'objet de l'invention est une méthode de calibrage d'un récepteur GNSS multi-voies conduisant à la détermination d'un filtre d'égalisation large bande et/ou d'un filtre d'égalisation bande étroite, ainsi qu'un récepteur comprenant de tels filtres.

Dans un récepteur multi-voies, un problème général concerne la calibrage des différentes voies de réception afin de compenser les différences en temps, phase et amplitude qui peuvent impacter le signal reçu sur les différentes voies. En effet, chaque voie de réception comprend une antenne ainsi qu'une chaine de réception radiofréquence qui comporte notamment un ou plusieurs filtre(s) de mise en forme et un ou plusieurs amplificateur(s). Ces différents composants peuvent ne pas présenter exactement les mêmes caractéristiques, en particulier, les temps de groupe, les gains en amplitude et en phase peuvent être sensiblement différents. Ces différences entrainent un désappairage des voies de réception qui doivent, en théorie, toutes avoir la même réponse en fréquence. Les signaux reçus sur les différentes voies de réception peuvent ainsi être impactés par ces différences et les traitements appliqués aux signaux en vue de déterminer des informations de positionnement du récepteur ou de direction d'arrivée des signaux peuvent être perturbés.

Dans un contexte d'applications qui nécessitent une grande fiabilité de l'information de positionnement, il est donc nécessaire de calibrer très précisément les récepteurs afin d'éviter au maximum les distorsions entre les différentes voies de réception. Cette nécessité est notamment importante pour des applications aéronautiques ou liées aux transports.

Les solutions connues permettant de résoudre le problème de calibrage d'un récepteur GNSS multi-voies peuvent être basées sur un pré-calibrage en usine effectué sur chaque équipement et utilisant des mesures en laboratoire ou en chambre anéchoïque. La réponse des voies de réception RF étant sensible à la température, il est nécessaire d'utiliser des composants thermostatés ou des senseurs thermiques. D'autres solutions utilisent un signal radiofréquence dédié au calibrage qui est généré par un dispositif spécifique interne ou externe au récepteur.

De manière générale, les solutions existantes présentent l'inconvénient de nécessiter des dispositifs ou équipements supplémentaires.

On connait par ailleurs d'autres solutions décrites dans les documents EP805510, US5525997 et US7304605.

L'invention propose une méthode de calibrage d'un récepteur multi-voies GNSS qui ne nécessite pas l'utilisation d'un générateur de signal spécifique et qui peut être mise en oeuvre directement à partir de simples mesures réalisées sur un récepteur en fonctionnement.

L'invention consiste notamment à déterminer un premier filtre d'égalisation large bande qui peut être positionné en sortie des voies de réception RF et en entrée des corrélateurs pour corriger le désappairage entre les différentes voies de réception RF. L'invention consiste également à déterminer un second filtre d'égalisation bande étroite pour corriger les erreurs de gain et phase résiduels.

L'invention s'applique à tout système de positionnement par satellite, notamment à des récepteurs compatibles des systèmes GNSS GPS, GALILEO ou GLONASS.

L'invention a ainsi pour objet une méthode de calibrage d'un récepteur de signaux de navigation par satellites, ledit récepteur comprenant une pluralité de voies de réception comprenant chacune une antenne de réception et une pluralité de corrélateurs pour corréler le signal reçu par l'antenne avec un code local retardé d'un retard paramétrable, ladite méthode de calibrage comprenant la détermination d'au moins un filtre égaliseur large bande destiné à être appliqué entre l'antenne de réception et les corrélateurs de chaque voie de réception, lesdits filtres égaliseur large bande étant obtenus par les étapes suivantes :

- Construire, pour chaque voie de réception, un vecteur de corrélation comprenant les points de corrélation obtenus simultanément en sortir desdits corrélateurs,
- Déterminer, à partir de la fonction de corrélation du code local avec le signal reçu, estimée, pour chaque voie de réception, à partir des vecteurs de corrélation, la voie de réception, appelée voie de référence, pour laquelle le signal reçu est le plus en retard par rapport au code local,
- Déterminer, pour chaque voie de réception sauf la voie de référence, le filtre égaliseur large bande en calculant la déconvolution du vecteur de corrélation de ladite voie de réception par le vecteur de corrélation de la voie de référence.

Selon une variante de réalisation, la méthode selon l'invention comprend au préalable la recherche et la retenue, parmi les signaux reçus par ledit récepteur et provenant de plusieurs satellites, de ceux qui ne sont pas affectés par la présence de trajets multiples du signal et la sélection d'un signal parmi ceux retenus.

Selon une variante de réalisation, la méthode selon l'invention comprend la recherche et la sélection, parmi les signaux retenus, du signal émis par le satellite ayant l'élévation la plus élevée parmi les satellites émetteurs des signaux reçus par ledit récepteur.

Selon une variante de réalisation, la méthode selon l'invention comprend la recherche et la sélection, parmi les signaux retenus, du signal qui présente le rapport signal à bruit le plus élevé.

Selon une variante de réalisation, la méthode selon l'invention comprend une étape de filtrage des sorties desdits corrélateurs pour diminuer le bruit de mesure.

Selon une variante de réalisation, la méthode selon l'invention comprend la détermination d'un filtre égaliseur bande étroite comprenant un coefficient complexe destiné à être appliqué au signal filtré par le filtre égaliseur large bande sur chaque voie de réception, ledit filtre égaliseur bande étroite étant obtenu par les étapes suivantes :

- Pour chaque signal reçu provenant d'un satellite distinct et pour chaque voie de réception, filtrer le vecteur de corrélation par le filtre égaliseur large bande,
- Déterminer, pour chaque signal reçu provenant d'un satellite distinct, une matrice d'intercorrélation spatiale $R_k$ à partir des vecteurs de corrélation de chaque voie de réception,
- Déterminer, pour chaque signal reçu provenant d'un satellite distinct, la direction d'arrivée théorique du signal reçu à partir de la position du satellite,
- Déterminer une fonction de coût Q représentative de l'erreur globale entre les directions d'arrivée estimées et les directions d'arrivée théoriques des signaux reçus, une direction d'arrivée estimée étant déterminée à partir de la matrice d'intercorrélation spatiale $R_k$ et du coefficient complexe du filtre égaliseur bande étroite appliqué au signal reçu,
- Rechercher, pour chaque voie de réception, les valeurs des coefficients complexes qui permettent de minimiser la fonction de coût Q.

L'invention a aussi pour objet une méthode de calibrage d'un récepteur de signaux de navigation par satellite, ledit récepteur comprenant une pluralité de voies de réception comprenant chacune une antenne de réception, une pluralité de corrélateurs pour corréler le signal reçu par l'antenne avec un code local retardé d'un retard paramétrable et un filtre égaliseur large bande, obtenu par l'exécution de la méthode de calibrage selon l'invention et appliqué entre l'antenne de réception et les corrélateurs de chaque voie de réception, ladite méthode de calibrage comprenant la détermination d'un filtre égaliseur bande étroite comprenant un coefficient complexe destiné à être appliqué au signal filtré par le filtre égaliseur large bande sur chaque voie de réception, ledit filtre égaliseur bande étroite étant obtenu par les étapes suivantes :

- Déterminer, pour chaque signal reçu provenant d'un satellite distinct, une matrice d'intercorrélation spatiale $R_k$ à partir des vecteurs de corrélation de chaque voie de réception,
- Déterminer, pour chaque signal reçu provenant d'un satellite distinct, la direction d'arrivée théorique du signal reçu à partir de la position du satellite,
- Déterminer une fonction de coût Q représentative de l'erreur globale entre les directions d'arrivée estimées et les directions d'arrivée théoriques des signaux reçus, une direction d'arrivée estimée étant déterminée à partir de la matrice d'intercorrélation spatiale $R_k$ et du coefficient complexe du filtre égaliseur bande étroite appliqué au signal reçu,
- Rechercher, pour chaque voie de réception, les valeurs des coefficients complexes qui permettent de minimiser la fonction de coût Q.

Selon un aspect particulier de l'invention, la matrice d'intercorrélation spatiale $R_k$ est moyennée sur plusieurs instants consécutifs.

Selon un aspect particulier de l'invention, les directions d'arrivée des signaux reçus sont transposées dans un repère lié aux antennes de réception à partir de l'attitude du récepteur.

Selon un aspect particulier de l'invention, l'attitude du récepteur est intégrée comme paramètre de la fonction de coût Q et la méthode comprend en outre la recherche de la valeur de l'attitude du récepteur qui permet de minimiser la fonction de coût Q.

Selon un aspect particulier de l'invention, la fonction de coût Q dépend des vecteurs directionnels $a(\hat{\theta}_k, \hat{\varphi}_k)$ des antennes de réception du récepteur calculés dans les directions d'arrivée théoriques des signaux reçus.

Selon un aspect particulier de l'invention, la fonction de coût Q est obtenue en sommant plusieurs fonctions de coûts chacune représentative de l'erreur entre la direction d'arrivée estimée et la direction d'arrivée théorique d'un signal reçu provenant d'un satellite.

Selon un aspect particulier de l'invention, la fonction de coût Q est donnée par la relation

$$Q = \sum_{k=1}^{Ns} \mathbf{a}\left(\hat{\theta}_k, \hat{\varphi}_k\right)^H \mathbf{\Gamma}^H \mathbf{R}_k^{-1} \mathbf{\Gamma}.\mathbf{a}\left(\hat{\theta}_k, \hat{\varphi}_k\right)$$

avec $N_S$ le nombre de signaux reçus provenant de satellites distincts, $R_k^{-1}$ est l'inverse de la matrice d'intercorrélation spatiale, $\Gamma$ est une matrice diagonale dont les composantes sont les coefficients complexes des filtres d'égalisation bande étroite sur chaque voie de réception et $^H$ est l'opérateur transposé conjugué.

L'invention a aussi pour objet un récepteur de signaux de navigation par satellite comprenant une pluralité de voies de réception comprenant chacune une antenne de réception, une pluralité de corrélateurs pour corréler le signal reçu par l'antenne avec un code local retardé d'un retard paramétrable et un filtre égaliseur large bande, disposé entre l'antenne de réception et lesdits corrélateurs et obtenu par l'exécution de la méthode de calibrage selon un premier mode de réalisation de l'invention.

Dans une variante particulière de réalisation, le récepteur selon l'invention comprend en outre, sur chaque voie de réception, un filtre égaliseur bande étroite à un coefficient complexe, disposé entre la sortie du filtre égaliseur large bande et l'entrée desdits corrélateurs et obtenu par l'exécution de la méthode de calibrage selon un second mode de réalisation de l'invention.

Dans une variante particulière de réalisation, le récepteur selon l'invention comprend en outre, sur chaque voie de réception, au moins une ligne à retard connectée en sortie desdits corrélateurs.

L'invention a encore pour objet un programme d'ordinateur comportant des instructions pour l'exécution de la méthode de calibrage d'un récepteur de signaux de navigation par satellite selon l'invention, lorsque le programme est exécuté par un processeur.

D'autres caractéristiques et avantages de la présente invention apparaîtront mieux à la lecture de la description qui suit en relation aux dessins annexés qui représentent :

- La figure 1, un schéma d'un récepteur GNSS multi-voies,
- La figure 2, un organigramme décrivant les étapes de mise en oeuvre d'une méthode de calibrage selon un premier mode de réalisation de l'invention,
- La figure 3, un organigramme décrivant les étapes de mise en oeuvre d'une méthode de calibrage selon un second mode de réalisation de l'invention,
- La figure 4, un schéma d'un récepteur GNSS multi-voies calibré selon l'invention.

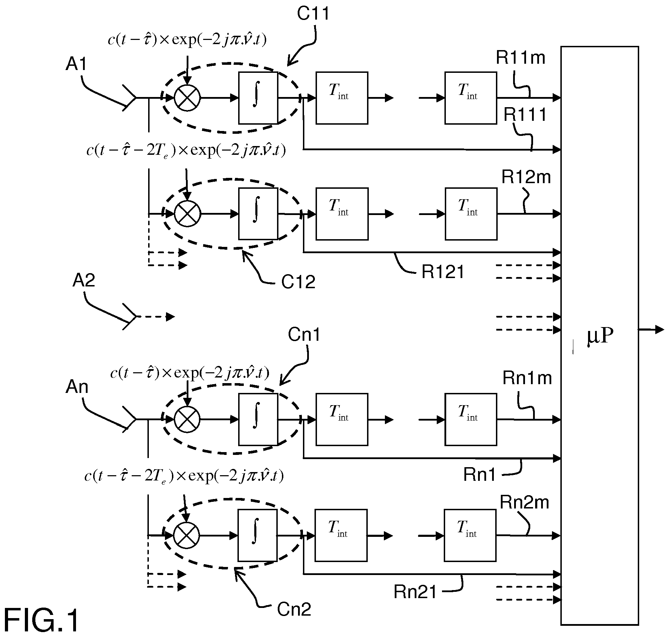

La figure 1 représente un schéma d'un exemple de récepteur GNSS multi-voies pour lequel l'invention s'applique. Un tel récepteur est décrit en détail dans la demande internationale de brevet publiée sous le numéro WO 2012/025306.

Il comprend plusieurs voies de réception comprenant chacune une antenne élémentaire A1,A2,...An conçue pour capter un ou plusieurs signaux de radio-navigation émis par un ou plusieurs satellites. Chaque voie de réception comporte également une chaine de traitement radio-fréquence (non représentée sur la figure 1) comprenant notamment un ou plusieurs filtres de mise en forme, un ou plusieurs amplificateurs ainsi qu'un convertisseur analogique numérique. Les signaux analogiques échantillonnés sont ensuite fournis à plusieurs corrélateur(s) C11,C12,..Cn1,Cn2. Un corrélateur a pour rôle de réaliser une corrélation entre le signal reçu et une version locale du code d'étalement utilisé pour émettre le signal de radio-navigation. On rappelle que les signaux de radio-navigation sont des signaux à étalement de spectre, par exemple des signaux utilisant la technique d'étalement de spectre CDMA (Code Division Multiple Access) en ce qui concerne les systèmes GPS et Galileo. Un code spécifique est associé à chaque satellite de la constellation.

Plusieurs corrélateurs C11,C12 sont utilisés pour former un banc de corrélateurs sur chaque voie de réception. Chaque corrélateur du banc utilise une version retardée du code local, le retard étant multiple de la période d'échantillonnage du signal.

Un corrélateur fournit en sortie des points de corrélation et les différents points de corrélation fournis par le banc de corrélateurs permettent de former une fonction de corrélation. La recherche du pic (ou maximum) de cette fonction de corrélation permet de synchroniser le signal reçu sur le code local et de déterminer ainsi une information de positionnement par le biais de plusieurs mesures de pseudo-distances entre plusieurs satellites et le récepteur.

Chaque corrélateur peut également être relié en sortie à une ou plusieurs lignes à retard R11m,R111,R12m,R121,.. Rn1m,Rn11,Rn2m. L'écart introduit par chaque ligne à retard correspond à un multiple de la durée d'intégration d'un corrélateur. Les lignes à retard permettent de sauvegarder les résultats de corrélation sur une durée égale au nombre de lignes à retard multiplié par la durée d'intégration.

Les différents résultats de corrélation sont enfin fournis à un module de calcul $\mu P$ qui implémente un algorithme de traitement de signal permettant de déterminer une information de positionnement.

Un objectif de l'invention est de proposer une méthode de calibrage d'un récepteur multi-voies du type de celui décrit à la figure 1.

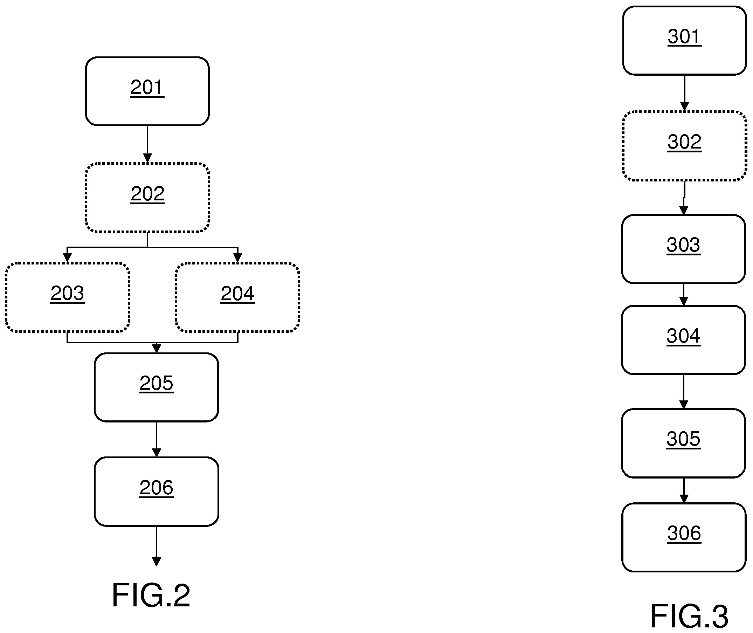

La figure 2 représente un organigramme détaillant les étapes de mise en oeuvre de la méthode de calibrage selon un premier mode de réalisation de l'invention qui comprend la détermination d'un filtre égaliseur large bande pour chaque voie de réception.

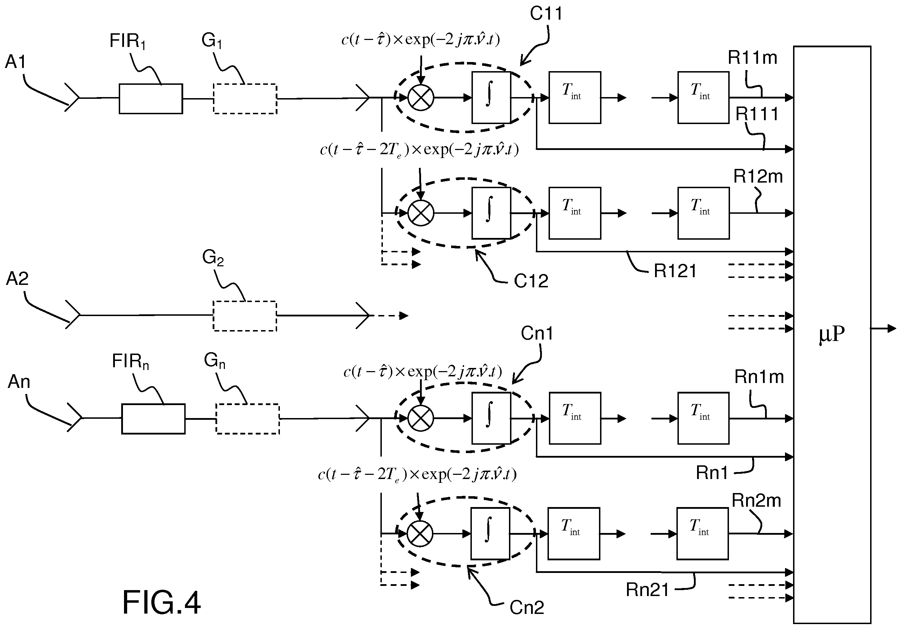

Un filtre égaliseur est déterminé pour chaque voie de réception pour être positionné derrière chaque antenne et derrière la chaine de réception RF comme indiqué sur la figure 4.

Le filtre égaliseur large bande déterminé selon l'invention a pour objectif d'égaliser les fluctuations et différences de temps de groupe, de gain et de phase, dans la bande des signaux utiles, entre les différentes voies de réception.

Selon une première étape 201, on construit, pour chaque voie de réception, un vecteur de corrélation dont chaque composante est égale à un point de corrélation obtenu en sorti d'un corrélateur d'un banc de corrélateurs. Le vecteur de corrélation comprend ainsi les sorties des corrélateurs à un même instant. On rappelle que chaque corrélateur du banc réalise une corrélation avec un code local retardé d'un multiple de la période d'échantillonnage.

La première étape 201 est réalisée pour chaque voie de réception en considérant les signaux reçus par le récepteur pour un ou plusieurs satellites.

Dans une étape optionnelle 202, les vecteurs de corrélation sont analysés pour identifier les signaux qui sont affectés par des multitrajets provenant de réflexions du signal émis par un satellite sur des obstacles, par exemple des obstacles urbains.

Plus précisément, si n signaux émis par n satellites différents sont reçus par le récepteur, on analyse les vecteurs de corrélation calculés pour ces n signaux afin de déterminer si certain de ces signaux sont affectés par des multitrajets.

Différentes méthodes sont envisageables pour identifier la présence de multitrajets. De façon générale, il est possible de comparer la forme de la fonction de corrélation (déterminée à partir d'un ou plusieurs vecteurs de corrélation) à un modèle théorique. Si la forme de la fonction de corrélation mesurée diffère significativement du modèle théorique, cela peut signifier que le signal est affecté par des multitrajets.

A l'issue de l'étape 202, les n signaux reçus sont classés en deux groupes, un premier groupe de m signaux (m inférieur ou égal à n) non affectés par des multitrajets et un second groupe de n-m signaux affectés par des multitrajets. Les signaux du second groupe sont par la suite éliminés et ne sont plus pris en compte pour les traitements suivants.

L'étape 202 est optionnelle dans la mesure où il est possible de mettre en oeuvre l'invention en considérant qu'aucun signal reçu n'est affecté par la présence de multitrajets, par exemple parce que l'environnement du récepteur n'est pas susceptible de provoquer des réflexions du signal sur des obstacles.

La méthode se poursuit ensuite avec deux étapes alternatives 203,204 optionnelles qui ont pour objectif de ne retenir qu'un seul signal parmi les m signaux sélectionnés à l'étape 202.

L'étape 203 consiste à déterminer, pour chacun des m signaux retenus, l'angle d'élévation du satellite émetteur puis à retenir uniquement le signal émis par le satellite ayant l'élévation la plus élevée. L'angle d'élévation peut être déterminé à partir de la position du satellite obtenue à l'aide d'éphémérides.

Alternativement l'étape 204 consiste à retenir le signal qui présente le rapport signal à bruit le plus élevé parmi les m signaux. Le rapport signal à bruit peut être estimé par différentes méthodes de traitement de signal, par exemple à partir de la méthode dite des moments ou de la méthode « narrow wideband power ratio » appliquées en sortie du corrélateur « prompt ». Le document « Carrier-to-Noise Algorithms », M. Petovello, pp.20-27, Inside GNSS Jan/Feb 2010 donne plusieurs exemples d'algorithmes de mesure du rapport signal à bruit dans un récepteur GNSS.

Si les étapes 202,203,204 ne sont pas exécutées, la solution la plus simple consiste à sélectionner un signal parmi les n signaux disponibles de façon aléatoire.

Dans une étape 205, appliquée au signal retenu parmi les n signaux disponibles, on évalue, à partir des différents vecteurs de corrélation déterminés à l'étape 201, quelle est la voie de réception qui présente le temps de propagation de groupe le plus important, autrement dit la voie de réception sur laquelle le signal reçu est le plus retardé. Pour cela, on compare les retards estimés sur les différentes voies de réception entre le signal reçu et le code généré localement. Une façon d'estimer ce retard consiste à mesurer, sur chaque voie de réception, l'instant temporel associé au pic (ou maximum) de la fonction de corrélation puis à comparer les différentes mesures afin d'identifier celle qui correspond au retard le plus important. La voie de réception ainsi identifiée est désignée par la suite voie de référence.

Dans une étape 206, on détermine ensuite, pour chaque voie de réception, sauf la voie de référence, un filtre égaliseur large bande.

Ce filtre a pour fonction de compenser les différences de retard, gain et phase, dans la bande du signal utile, entre chaque voie de réception et la voie de référence qui correspond à la référence de temps de propagation de groupe, gain et phase. Ainsi, dans le récepteur calibré selon l'invention tel que décrit à la figure 4, la voie de référence (voie 2 sur la figure 4) ne comporte pas de filtre égaliseur tandis que toutes les autres voies comportent un filtre égaliseur positionné entre la chaine RF et les corrélateurs.

Les coefficients du filtre égaliseur sont déterminés en réalisant une opération de déconvolution du vecteur de corrélation de la voie de réception considérée par le vecteur de corrélation de la voie de référence.

En appliquant les filtres égaliseurs ainsi déterminés en amont des corrélateurs, on obtient, en sortie des corrélateurs, des vecteurs de corrélation sensiblement identiques sur chaque voie de réception.

Si on note h() la réponse du filtre égaliseur à déterminer, C() la réponse d'un banc de corrélateurs et $S_r$ le signal reçu pris en sortie de chaine RF, alors le vecteur de corrélation $V_c$ obtenu en appliquant le filtre égaliseur entre la chaine RF et le banc de corrélateurs est $V_c = C(h(S_r)) = h(C(S_r)) = h(V'_c)$ où $V'_c$ est le vecteur de corrélation obtenu sans appliquer le filtre égaliseur. Si $h(X)=X^* V'c^{-1} V_{cref}$ ou * désigne une opération de convolution, alors on obtient $V_c = V_{cref}$ sur chaque voie de réception égalisée.

Dans une variante de réalisation, les signaux reçus sur chaque voie peuvent être filtrés par un filtre supplémentaire de sorte à augmenter le rapport signal à bruit.

La figure 3 représente un organigramme détaillant les étapes de mise en oeuvre de la méthode de calibrage selon un second mode de réalisation de l'invention qui comprend la détermination d'un filtre égaliseur bande étroite pour chaque voie de réception.

L'application de la méthode de calibrage large bande décrite ci-dessus permet d'égaliser les désappairages entre les voies. L'invention propose également une méthode de calibrage bande étroite qui est appliquée en supplément de la méthode de calibrage large bande et qui permet d'égaliser les résidus de gain et phase statique entre les différentes voies de réception.

La méthode de calibrage bande étroite selon l'invention s'applique à des signaux mesurés sur un récepteur qui a été, au préalable, calibré par la méthode de calibrage large bande selon l'invention.

Ainsi, la méthode décrite à l'appui de la figure 3 peut être appliquée à des mesures de corrélation réalisées sur un récepteur du type de celui décrit à la figure 1 mais comprenant en outre les filtres égaliseurs obtenus par application de la méthode de calibrage large bande décrite à la figure 2.

Alternativement, il est possible d'utiliser les mêmes mesures de corrélation exploitées pour la méthode de calibrage large bande, c'est-à-dire des mesures réalisées sur un récepteur du type de la figure 1 qui ne comporte aucun filtre égaliseur, puis de simuler l'effet de ces filtres égaliseurs sur les mesures de corrélation afin de générer de nouvelles mesures de corrélation « filtrées » qui peuvent être utilisées comme valeurs d'entrée de la méthode de calibrage bande étroite.

La méthode de calibrage bande étroite selon l'invention comprend une première étape 301 identique à la première étape 201 de la méthode de calibrage large bande décrite à la figure 2.

Autrement dit, cette étape 301 consiste à construire, pour chaque voie de réception, un vecteur de corrélation dont chaque composante est égale à un point de corrélation obtenu en sortie d'un corrélateur d'un banc de corrélateurs. La première étape 301 est réalisée pour chaque voie de réception en considérant les signaux reçus par le récepteur pour un ou plusieurs satellites. Comme indiqué, les vecteurs de corrélation sont obtenus par mesure sur un récepteur comprenant des filtres égaliseurs large bande ou à partir de mesures de corrélation réalisées sur un récepteur non calibré sur lesquelles l'influence des filtres égaliseurs large bande est simulée.

Une étape 302, identique à l'étape 202 de la méthode de calibrage large bande, peut ensuite être appliquée optionnellement.

Selon cette étape 302, les vecteurs de corrélation sont analysés pour identifier les signaux qui sont affectés par des multitrajets provenant de réflexions du signal émis par un satellite sur des obstacles, par exemple des obstacles urbains.

Différentes méthodes sont envisageables pour identifier la présence de multitrajets. De façon générale, il est possible de comparer la forme de la fonction de corrélation (déterminée à partir d'un ou plusieurs vecteurs de corrélation) à un modèle théorique. Si la forme de la fonction de corrélation mesurée diffère significativement du modèle théorique, cela peut signifier que le signal est affecté par des multitrajets.

A l'issue de l'étape 302, on retient les signaux qui ne sont pas affectés par des multitrajets. On note Ns le nombre de ces signaux retenus. Ce nombre est au moins égal à deux.

Dans une étape 303, on construit, pour chaque signal retenu indicé par k, une matrice d'intercorrélation spatiale $R_k$ du récepteur.

La matrice d'intercorrélation spatiale $R_k$ peut être déterminée à partir des vecteurs de corrélation des différentes voies de réception. Plus précisément, chaque composante de la matrice d'intercorrélation peut correspondre au produit scalaire entre deux vecteurs de corrélation (ou entre un sous-ensemble des composantes des vecteurs de corrélation) associés à deux voies de réception différentes.

Afin de diminuer le niveau de bruit impactant les valeurs de la matrice d'intercorrélation et d'obtenir une matrice de rang plein, on peut exploiter les lignes à retard du récepteur GNSS situées derrière les corrélateurs (cf figure 1) pour calculer plusieurs matrices d'intercorrélation à différents instants successifs puis calculer la moyenne des matrices d'intercorrélation déterminées.

Dans une étape 304, on détermine, pour chaque signal associé à un satellite émetteur différent, la direction théorique d'arrivée du signal, autrement dit la direction théorique entre le repère attaché au réseau d'antenne du récepteur et le satellite. Cette direction théorique peut être déterminée par un couple d'angle d'azimut et d'angle d'élévation $(\hat{\theta}_k, \hat{\varphi}_k)$ ou par tout autre couple d'angles permettant d'identifier une direction d'arrivée d'un signal. La direction théorique peut être déterminée à partir des coordonnées du satellite qui sont obtenues grâce, par exemple, à des éphémérides. La détermination de la direction théorique d'arrivée du signal nécessite également une transposition de la direction déterminée à partir des coordonnées du satellite, qui sont exprimées dans un repère fixe par rapport à la Terre, vers un repère lié au récepteur et plus précisément au réseau d'antennes que comporte le récepteur. Ce changement de repère nécessite une estimée de l'attitude du réseau d'antennes. L'attitude peut être exprimée à l'aide de trois angles.

Selon une variante de réalisation de l'invention, dans le cas où l'attitude du réseau d'antennes n'est pas connue, il est possible de prendre plusieurs hypothèses a priori sur la valeur de l'attitude et d'intégrer cette donnée comme une variable de la fonction de coût déterminée à l'étape suivante 305. Ce point sera explicité plus en détail par la suite.

Dans une étape 305, on détermine une fonction de coût Q représentative de l'erreur entre les directions estimées d'arrivée des signaux et les directions théoriques d'arrivée des signaux.

La fonction de coût Q peut être déterminée comme la somme de fonctions de coûts $Q_k$ associées à chaque signal provenant d'un satellite d'indice k.

Une fonction de coût $Q_k$ dépend de la matrice d'intercorrélation spatiale calculée à l'étape 304 et plus précisément de l'inverse de cette matrice. Elle dépend également des coefficients des filtres égaliseurs bande étroite déterminés in fine par la méthode de calibrage bande étroite. Ces coefficients peuvent être regroupés dans une matrice diagonale Γ. Un coefficient complexe d'égalisation est ainsi destiné à être appliqué sur chaque voie de réception, préférentiellement en amont des corrélateurs. Les coefficients complexes d'égalisation, formant le filtre d'égalisation bande étroite selon l'invention, visent à corriger les erreurs commises sur l'estimation des directions d'arrivées des signaux du fait de défauts résiduels dans l'appairage des voies de réception. Enfin, la fonction de coût $Q_k$ dépend du vecteur directionnel $a(\hat{\theta}_k, \hat{\varphi}_k)$ du réseau antennaire du récepteur GNSS qui comprend les amplitudes et les déphasages relatifs des signaux reçus par chaque antenne du réseau par rapport à une antenne du réseau prise comme référence, en fonction de la direction du signal reçu.

La fonction de coût $Q_k$ peut prendre la forme suivante : $Q_k = \mathbf{a}\left(\hat{\theta}_k, \hat{\varphi}_k\right)^H \boldsymbol{\Gamma}^H \mathbf{R}_k^{-1} \boldsymbol{\Gamma}.\mathbf{a}\left(\hat{\theta}_k, \hat{\varphi}_k\right),$ où l'exposant H désigne l'opérateur transposé conjugué. La fonction de coût globale Q est donnée par la relation

$$Q = \sum_{k=1}^{Ns} \mathbf{a}\left(\hat{\theta}_k, \hat{\varphi}_k\right)^H \boldsymbol{\Gamma}^H \mathbf{R}_k^{-1} \boldsymbol{\Gamma}.\mathbf{a}\left(\hat{\theta}_k, \hat{\varphi}_k\right).$$

Toute variante de calcul de la fonction de coût introduite ci-dessus entre dans le périmètre de l'invention dans la mesure où celle-ci est bien représentative de l'erreur entre les directions estimées d'arrivée des signaux et les directions théoriques d'arrivée des signaux. Les directions estimées d'arrivée des signaux sont déterminées en prenant en compte un filtre d'égalisation bande étroite appliqué à chaque voie de réception et comprenant un seul coefficient complexe permettant de compenser le gain et la phase du signal reçu sur chaque voie de sorte à corriger la direction estimée d'arrivée du signal par rapport à la direction théorique déterminée à partir des positions connues des satellites.

La fonction de coût Q déterminée à l'issue de l'étape 305 a pour inconnues les coefficients d'égalisation bande étroite appliqués à chaque voie de réception et formalisés par la matrice diagonale Γ.

Selon une variante de réalisation de l'invention introduite précédemment, si l'attitude du réseau antennaire du récepteur GNSS n'est pas connue et qu'il n'est pas possible de la déterminer, alors le vecteur directionnel $a(\hat{\theta}_k, \hat{\varphi}_k)$ peut inclure l'attitude du réseau antennaire en tant que paramètre.

Dans une étape 306, on recherche les valeurs des coefficients d'égalisation bande étroite qui permettent de minimiser la fonction de coût Q déterminée à l'issue de l'étape 305.

En réécrivant la matrice diagonale Γ sous la forme d'un vecteur colonne κ, la fonction de coût peut se mettre sous la forme plus avantageuse :

$$Q = \boldsymbol{\kappa}^H \left[ \sum_{k=1}^{Ns} diag\left(\mathbf{a}\left(\hat{\theta}_k, \hat{\varphi}_k\right)\right)^H \mathbf{R}_k^{-1} diag\left(\mathbf{a}\left(\hat{\theta}_k, \hat{\varphi}_k\right)\right) \right] \boldsymbol{\kappa} = \boldsymbol{\kappa}^H \mathbf{Z} \boldsymbol{\kappa}$$

Le problème de minimisation de la fonction de coût Q revient donc à minimiser le terme $\kappa^H \mathbf{Z} \kappa$ sous la contrainte $\kappa_1 = 1$ où $\kappa_1$ désigne le premier terme du vecteur κ. Cette contrainte est nécessaire pour éviter la solution triviale κ = 0. En résolvant ce problème d'optimisation quadratique à contrainte linéaire, on obtient la solution :

$$\hat{\boldsymbol{\kappa}} = \frac{\mathbf{Z}^{-1}\mathbf{w}}{\mathbf{w}^H \mathbf{Z}^{-1}\mathbf{w}} \text{ avec } \mathbf{w} = \begin{bmatrix} 1 & 0 & \cdots & 0 \end{bmatrix}^T$$

$$Q_{\min} = \frac{1}{\mathbf{w}^H \mathbf{Z}^{-1} \mathbf{w}}$$

Selon une variante de réalisation de l'invention introduite précédemment, si l'attitude du réseau antennaire du récepteur n'est pas connue, elle est ajoutée aux inconnues de la fonction de coût et est considérée comme paramètre supplémentaire dans la minimisation de la fonction de coût. Par exemple, l'étape 306 décrite ci-dessus peut être répétée pour plusieurs hypothèses d'attitude du réseau antennaire prises dans une plage de variation d'attitude prédéterminée. Pour chaque hypothèse d'attitude, le minimum $Q_{min}$ de la fonction de coût est déterminé ainsi que le vecteur d'égalisation $\kappa$ qui permet d'obtenir ce minimum. Ensuite, une étape supplémentaire de recherche de minimum parmi les minima $Q_{min}$ est effectuée et on retient in fine le minimum $Q_{min}$ de la fonction de coût parmi les minima calculés pour chaque hypothèse d'attitude et le vecteur d'égalisation associé.

Le procédé de calibrage selon le premier ou le second mode de réalisation de l'invention peut être mis en oeuvre en tant que programme d'ordinateur comportant des instructions pour son exécution. Le programme d'ordinateur selon l'invention prend en entrée des points de mesures réalisées en sorties des corrélateurs d'un récepteur GNSS tel qu'explicité ci-dessus. Le programme d'ordinateur selon l'invention fournit en sortie les coefficients des filtres d'égalisation large bande et/ou des filtres d'égalisation bande étroite. Le programme d'ordinateur peut être enregistré sur un support d'enregistrement lisible par un processeur. Le support peut être électronique, magnétique, optique ou électromagnétique.

La figure 4 représente un schéma d'un récepteur GNSS multi-voies modifié selon l'invention.

Le récepteur décrit à la figure 4 comporte les mêmes éléments que le récepteur de la figure 1. Selon une première variante de l'invention, il comporte en outre, sur chaque voie de réception sauf une, un filtre d'égalisation large bande $FIR_1, FIR_n$. Sur l'exemple de la figure 4, la voie de réception numéro deux est la voie de référence. Les filtres d'égalisation large bande $FIR_1, FIR_n$ sont déterminés par la méthode de calibrage large bande selon l'invention telle que décrite à l'appui de la figure 2.

Les filtres d'égalisation large bande $FIR_1, FIR_n$ sont positionnés, comme indiqué sur la figure 4, entre les chaines RF et les corrélateurs de chaque voie de réception.

Les filtres d'égalisation large bande $FIR_1, FIR_n$ peuvent être mis en oeuvre au moyen de filtres à réponse impulsionnelle finie comportant un nombre de coefficients inférieur au nombre de corrélateurs.

Selon une seconde variante de l'invention, le récepteur GNSS multi-voies comporte en outre, non seulement les filtres d'égalisation large bande $FIR_1, FIR_n$ décrits ci-dessus mais également un filtre d'égalisation bande étroite $G_1, G_2, G_n$ sur chaque voie de réception (y compris la voie de référence). Les filtres d'égalisation bande étroite $G_1, G_2, G_n$ sont déterminés par la méthode de calibrage bande étroite selon l'invention telle que décrite à l'appui de la figure 3.

Les filtres d'égalisation bande étroite $G_1, G_2, G_n$ peuvent être positionnés, comme indiqué sur la figure 4, entre les filtres d'égalisation large bande et les corrélateurs de chaque voie de réception. Alternativement, ils peuvent également être positionnés en sortie des bancs de corrélateurs de chaque voie.

Les filtres d'égalisation bande étroite $G_1, G_2, G_n$ sont mis en oeuvre au moyen d'un multiplieur complexe, c'est-à-dire qui affecte un gain d'amplitude et un déphasage aux signaux reçus sur chaque voie.

Les différents filtres d'égalisation ainsi que les différents éléments qui composent le récepteur GNSS selon l'invention peuvent être mis en oeuvre par des moyens matériels et/ou logiciels. En particulier, le récepteur GNSS dans son ensemble ou chaque élément du récepteur peut être implémenté par un dispositif comprenant un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gâte Array »).

## Revendications

**1.** Méthode de calibrage d'un récepteur de signaux de navigation par satellites, ledit récepteur comprenant une pluralité de voies de réception comprenant chacune une antenne de réception (A1,A2..An) et une pluralité de corrélateurs (C11,C12,..Cn1,Cn2) pour corréler le signal reçu par l'antenne avec un code local retardé d'un retard paramétrable, ladite méthode de calibrage comprenant la détermination, par un processeur, d'au moins un filtre égaliseur large bande (FIR1,FIR2,..FIRn) destiné à être appliqué entre l'antenne de réception et les corrélateurs de chaque voie de réception, lesdits filtres égaliseur large bande étant obtenus par les étapes suivantes :

• Construire (201), pour chaque voie de réception, un vecteur de corrélation comprenant les points de corrélation obtenus simultanément en sortir desdits corrélateurs,
• Déterminer (205), à partir de la fonction de corrélation du code local avec le signal reçu, estimée, pour chaque voie de réception, à partir des vecteurs de corrélation, la voie de réception, appelée voie de référence, pour laquelle le signal reçu est le plus en retard par rapport au code local,
- Déterminer (206), pour chaque voie de réception sauf la voie de référence, le filtre égaliseur large bande en calculant la déconvolution du vecteur de corrélation de ladite voie de réception par le vecteur de corrélation de la voie de référence.

2. Méthode de calibrage d'un récepteur de signaux de navigation par satellite selon la revendication 1 comprenant au préalable la recherche et la retenue (202), parmi les signaux reçus par ledit récepteur et provenant de plusieurs satellites, de ceux qui ne sont pas affectés par la présence de trajets multiples du signal et la sélection d'un signal parmi ceux retenus.

3. Méthode de calibrage d'un récepteur de signaux de navigation par satellite selon la revendication 2 comprenant la recherche et la sélection (203), parmi les signaux retenus, du signal émis par le satellite ayant l'élévation la plus élevée parmi les satellites émetteurs des signaux reçus par ledit récepteur.

4. Méthode de calibrage d'un récepteur de signaux de navigation par satellite selon la revendication 2 comprenant la recherche et la sélection (204), parmi les signaux retenus, du signal qui présente le rapport signal à bruit le plus élevé.

5. Méthode de calibrage d'un récepteur de signaux de navigation par satellite selon l'une des revendications précédentes comprenant une étape de filtrage des sorties desdits corrélateurs pour diminuer le bruit de mesure.

6. Méthode de calibrage d'un récepteur de signaux de navigation par satellite selon l'une des revendications précédentes comprenant la détermination d'un filtre égaliseur bande étroite $(G_1,G_2,...G_n)$ comprenant un coefficient complexe destiné à être appliqué au signal filtré par le filtre égaliseur large bande (FIR1,FIR2,..FIRn) sur chaque voie de réception, ledit filtre égaliseur bande étroite étant obtenu par les étapes suivantes :

   - Pour chaque signal reçu provenant d'un satellite distinct et pour chaque voie de réception, filtrer le vecteur de corrélation par le filtre égaliseur large bande,
   - Déterminer (303), pour chaque signal reçu provenant d'un satellite distinct, une matrice d'intercorrélation spatiale $R_k$ à partir des vecteurs de corrélation de chaque voie de réception,
   - Déterminer (304), pour chaque signal reçu provenant d'un satellite distinct, la direction d'arrivée théorique du signal reçu à partir de la position du satellite,
   - Déterminer (305) une fonction de coût Q représentative de l'erreur globale entre les directions d'arrivée estimées et les directions d'arrivée théoriques des signaux reçus, une direction d'arrivée estimée étant déterminée à partir de la matrice d'intercorrélation spatiale $R_k$ et du coefficient complexe du filtre égaliseur bande étroite appliqué au signal reçu,
   - Rechercher (306), pour chaque voie de réception, les valeurs des coefficients complexes qui permettent de minimiser la fonction de coût Q.

7. Méthode de calibrage d'un récepteur de signaux de navigation par satellite, ledit récepteur comprenant une pluralité de voies de réception comprenant chacune une antenne de réception (A1,A2..An), une pluralité de corrélateurs (C11,C12,..Cn1,Cn2) pour corréler le signal reçu par l'antenne avec un code local retardé d'un retard paramétrable et un filtre égaliseur large bande (FIR1,FIR2,..FIRn), obtenu par l'exécution de la méthode de calibrage selon l'une des revendications 1 à 5 et appliqué entre l'antenne de réception et les corrélateurs de chaque voie de réception, ladite méthode de calibrage comprenant la détermination d'un filtre égaliseur bande étroite $(G_1,G_2,...G_n)$ comprenant un coefficient complexe destiné à être appliqué au signal filtré par le filtre égaliseur large bande (FIR1,FIR2,..FIRn) sur chaque voie de réception, ledit filtre égaliseur bande étroite étant obtenu par les étapes suivantes :

   - Déterminer (303), pour chaque signal reçu provenant d'un satellite distinct, une matrice d'intercorrélation spatiale $R_k$ à partir des vecteurs de corrélation de chaque voie de réception,
   - Déterminer (304), pour chaque signal reçu provenant d'un satellite distinct, la direction d'arrivée théorique du signal reçu à partir de la position du satellite,
   - Déterminer (305) une fonction de coût Q représentative de l'erreur globale entre les directions d'arrivée estimées et les directions d'arrivée théoriques des signaux reçus, une direction d'arrivée estimée étant déterminée à partir de la matrice d'intercorrélation spatiale $R_k$ et du coefficient complexe du filtre égaliseur bande étroite appliqué au signal reçu,
   - Rechercher (306), pour chaque voie de réception, les valeurs des coefficients complexes qui permettent de minimiser la fonction de coût Q.

**8.** Méthode de calibrage d'un récepteur de signaux de navigation par satellite selon l'une des revendications 6 ou 7 dans laquelle la matrice d'intercorrélation spatiale $R_k$ est moyennée sur plusieurs instants consécutifs.

**9.** Méthode de calibrage d'un récepteur de signaux de navigation par satellite selon l'une des revendications 6 à 8 dans laquelle les directions d'arrivée des signaux reçus sont transposées dans un repère lié aux antennes de réception à partir de l'attitude du récepteur.

**10.** Méthode de calibrage d'un récepteur de signaux de navigation par satellite selon la revendication 9 dans laquelle l'attitude du récepteur est intégrée comme paramètre de la fonction de coût Q et la méthode comprend en outre la recherche (306) de la valeur de l'attitude du récepteur qui permet de minimiser la fonction de coût Q.

**11.** Méthode de calibrage d'un récepteur de signaux de navigation par satellite selon l'une des revendications 6 à 10 dans laquelle la fonction de coût Q dépend des vecteurs directionnels $a(\hat{\theta}_k, \hat{\varphi}_k)$ des antennes de réception du récepteur calculés dans les directions d'arrivée théoriques des signaux reçus.

**12.** Méthode de calibrage d'un récepteur de signaux de navigation par satellite selon l'une des revendications 6 à 11 dans laquelle la fonction de coût Q est obtenue en sommant plusieurs fonctions de coûts chacune représentative de l'erreur entre la direction d'arrivée estimée et la direction d'arrivée théorique d'un signal reçu provenant d'un satellite.

**13.** Méthode de calibrage d'un récepteur de signaux de navigation par satellite selon l'une des revendications 6 à 12 dans laquelle la fonction de coût Q est donnée par la relation $$Q = \sum_{k=1}^{N_S} \mathbf{a}\left(\hat{\theta}_k, \hat{\varphi}_k\right)^H \mathbf{\Gamma}^H \mathbf{R}_k^{-1} \mathbf{\Gamma} \mathbf{a}\left(\hat{\theta}_k, \hat{\varphi}_k\right)$$ avec $N_S$ le nombre de signaux reçus provenant de satellites distincts, $R_k^{-1}$ est l'inverse de la matrice d'intercorrélation spatiale, $\Gamma$ est une matrice diagonale dont les composantes sont les coefficients complexes des filtres d'égalisation bande étroite sur chaque voie de réception et $^H$ est l'opérateur transposé conjugué.

**14.** Récepteur de signaux de navigation par satellite comprenant une pluralité de voies de réception comprenant chacune une antenne de réception (A1,A2..An), une pluralité de corrélateurs (C11,C12,..Cn1,Cn2) pour corréler le signal reçu par l'antenne avec un code local retardé d'un retard paramétrable et un filtre égaliseur large bande (FIR1,FIR2,..FIRn), disposé entre l'antenne de réception et lesdits corrélateurs et obtenu par l'exécution de la méthode de calibrage selon l'une des revendications 1 à 5.

**15.** Récepteur de signaux de navigation par satellite selon la revendication 14 comprenant en outre, sur chaque voie de réception, un filtre égaliseur bande étroite (G1,G2...Gn) à un coefficient complexe, disposé entre la sortie du filtre égaliseur large bande et l'entrée desdits corrélateurs et obtenu par l'exécution de la méthode de calibrage selon l'une des revendications 6 à 13.

**16.** Récepteur de signaux de navigation par satellite selon la revendication 15 comprenant en outre, sur chaque voie de réception, au moins une ligne à retard (R11m,R111,R12m,R121...Rn1m,Rn11,Rn2m,Rn21) connectée en sortie desdits corrélateurs.

**17.** Programme d'ordinateur comportant des instructions pour l'exécution de la méthode de calibrage d'un récepteur de signaux de navigation par satellite selon l'une quelconque des revendications 1 à 13, lorsque le programme est exécuté par un processeur.

**Patentansprüche**

**1.** Kalibrierverfahren eines Satelliten-Navigationssignalempfängers, wobei der Empfänger eine Vielzahl von Empfangskanälen beinhaltet, welche jeweils eine Empfangsantenne (A1,A2..An) und eine Vielzahl von Korrelatoren (C11, C12,..Cn1, Cn2) zum Korrelieren des durch die Antenne empfangenen Signals mit einem lokalen mit parametrierbarer Verzögerung verzögerten Code beinhaltet, wobei das Kalibrierverfahren die Bestimmung, durch einen Prozessor, von mindestens einem Breitband-Ausgleichsfilter (FIR1, FIR2,..FIRn) beinhaltet, dazu bestimmt, zwischen der Empfangsantenne und den Korrelatoren eines jeden Empfangskanals angewandt zu werden, wobei die Breitband-Ausgleichsfilter anhand folgender Schritte erzielt werden:

\* Konstruieren (201), für jeden Empfangskanal, eines Korrelationsvektors, beinhaltend die Korrelationspunkte, welche gleichzeitig am Ausgang der Korrelatoren erzielt wurden,

\* Bestimmen, (205), anhand der Korrelationsfunktion des lokalen Codes mit dem empfangenen Signal, die für jeden Empfangskanal, anhand der Korrelationsvektoren geschätzt wird, des Empfangskanals, genannt Referenzkanal, für welchen das empfangene Signal am meisten Verzögerung in Bezug auf den lokalen Code hat,

\* Bestimmen (206), für jeden Empfangskanal ausgenommen den Referenzkanal, des Breitband-Ausgleichsfilters durch Berechnen der Entfaltung des Korrelationsvektors des Empfangskanals durch den Korrelationsvektor des Referenzkanals.

2. Kalibrierverfahren eines Satelliten-Navigationssignalempfängers nach Anspruch 1, beinhaltend zuvor die Suche und die Selektion (202), unter den vom Empfänger empfangenen Signalen, die von mehreren Satelliten stammen, derjenigen Signale, die nicht vom Vorliegen multipler Bahnen des Signals betroffen sind, und die Auswahl eines Signals unter den selektierten Signalen.

3. Kalibrierverfahren eines Satelliten-Navigationssignalempfängers nach Anspruch 2, beinhaltend die Suche und die Auswahl (203), unter den selektierten Signalen, des von demjenigen Satelliten gesendeten Signals, welcher die höchste Erhebung unter den Sendesatelliten der vom Empfänger empfangenen Signale besitzt.

4. Kalibrierverfahren eines Satelliten-Navigationssignalempfängers nach Anspruch 2, beinhaltend die Suche und die Auswahl (204), unter den selektierten Signalen, desjenigen Signals, welches das höchste Signal-zu-Rauschen-Verhältnis besitzt.

5. Kalibrierverfahren eines Satelliten-Navigationssignalempfängers nach einem der vorhergehenden Ansprüche, beinhaltend einen Schritt des Filterns der Ausgänge der Korrelatoren, um das Mess-Rauschen zu verringern.

6. Kalibrierverfahren eines Satelliten-Navigationssignalempfängers nach einem der vorhergehenden Ansprüche, beinhaltend das Bestimmen eines Schmalband-Ausgleichsfilters (G1, G2,...Gn), welcher einen komplexen Koeffizienten beinhaltet, der dazu dient, auf das vom Breitband-Ausgleichsfilter (FIR1, FIR2,..FIRn) gefilterte Signal auf jedem Empfangskanal angewandt zu werden, wobei der Schmalband-Ausgleichsfilter anhand folgender Schritte erzielt wird:

   \* Für jedes von einem bestimmten Satelliten empfangene Signal und für jeden Empfangskanal, Filtern des Korrelationsvektors durch den Breitband-Ausgleichsfilter,

   \* Bestimmen (303), für jedes von einem bestimmten Satelliten empfangene Signal, einer räumlichen Interkorrelationsmatrix $R_k$ anhand der Korrelationsvektoren eines jeden Empfangskanals,

   \* Bestimmen (304), für jedes von einem bestimmten Satelliten empfangene Signal, der theoretischen Ankunftsrichtung des empfangenen Signals anhand der Position des Satelliten,

   \* Bestimmen (305) einer Kostenfunktion Q, welche den Gesamtfehler zwischen den geschätzten Ankunftsrichtungen und den theoretischen Ankunftsrichtungen der empfangenen Signale darstellt, wobei eine geschätzte Ankunftsrichtung anhand der räumlichen Interkorrelationsmatrix $R_k$ und des auf das empfangene Signal angewandten komplexen Koeffizienten des Schmalband-Ausgleichsfilters bestimmt wird,

   \* Suchen (306), für jeden Empfangskanal, der Werte der komplexen Koeffizienten, welche die Kostenfunktion Q zu minimieren ermöglichen.

7. Kalibrierverfahren eines Satelliten-Navigationssignalempfängers, wobei der Empfänger eine Vielzahl von Empfangskanälen beinhaltet, jeweils beinhaltend eine Empfangsantenne (A1, A2..An), eine Vielzahl von Korrelatoren (C11, C12,..Cn1, Cn2) zum Korrelieren des durch die Antenne empfangenen Signals mit einem lokalen mit parametrierbarer Verzögerung verzögerten Code und einen Breitband-Ausgleichsfilter (FIR1, FIR2,..FIRn), erzielt durch die Ausführung des Kalibrierverfahrens nach einem der Ansprüche 1 bis 5, und angewandt zwischen der Empfangsantenne und den Korrelatoren eines jeden Empfangskanals, wobei das Kalibrierverfahren das Bestimmen eines Schmalband-Ausgleichsfilters (G1,G2,...Gn) beinhaltet, beinhaltend einen komplexen Koeffizienten, der dazu dient, auf das vom Breitband-Ausgleichsfilter (FIR1, FIR2,..FIRn) gefilterte Signal auf jedem Empfangskanal angewandt zu werden, wobei der Schmalband-Ausgleichsfilter anhand folgender Schritte erzielt wird:

   \* Bestimmen (303), für jedes von einem bestimmten Satelliten empfangene Signal, einer räumlichen Interkorrelationsmatrix $R_k$ anhand der Korrelationsvektoren eines jeden Empfangskanals,

   \* Bestimmen (304), für jedes von einem bestimmten Satelliten empfangene Signal, der theoretischen Ankunftsrichtung des empfangenen Signals anhand der Position des Satelliten,

\* Bestimmen (305) einer Kostenfunktion Q, welche den Gesamtfehler zwischen den geschätzten Ankunftsrichtungen und den theoretischen Ankunftsrichtungen der empfangenen Signale darstellt, wobei eine geschätzte Ankunftsrichtung anhand der räumlichen Interkorrelationsmatrix $R_k$ und des auf das empfangene Signal angewandten komplexen Koeffizienten des Schmalband-Ausgleichsfilters bestimmt wird,

\* Suchen (306), für jeden Empfangskanal, der Werte der komplexen Koeffizienten, welche die Kostenfunktion Q zu minimieren ermöglichen.

8. Kalibrierverfahren eines Satelliten-Navigationssignalempfängers nach einem der Ansprüche 6 oder 7, bei welchem die räumliche Interkorrelationsmatrix $R_k$ über mehrere aufeinander folgende Zeitpunkte gemittelt wird.

9. Kalibrierverfahren eines Satelliten-Navigationssignalempfängers nach einem der Ansprüche 6 bis 8, bei welchem die Ankunftsrichtungen der empfangenen Signale in ein mit den Empfangsantennen verbundenes Koordinatensystem anhand der Lage des Empfängers transponiert werden.

10. Kalibrierverfahren eines Satelliten-Navigationssignalempfängers nach Anspruch 9, bei welchem die Lage des Empfängers als Parameter der Kostenfunktion Q integriert ist, und das Verfahren zudem die Suche (306) des Wertes der Lage des Empfängers beinhaltet, welcher die Minimierung der Kostenfunktion Q ermöglicht.

11. Kalibrierverfahren eines Satelliten-Navigationssignalempfängers nach einem der Ansprüche 6 bis 10, bei welchem die Kostenfunktion Q von den Richtungsvektoren $a(\hat{\theta}_k, \hat{\varphi}_k)$ der Empfangsantennen des Empfängers abhängt, welche in den theoretischen Ankunftsrichtungen der empfangenen Signale berechnet werden.

12. Kalibrierverfahren eines Satelliten-Navigationssignalempfängers nach einem der Ansprüche 6 bis 11, bei welchem die Kostenfunktion Q durch Summieren mehrerer Kostenfunktionen erzielt wird, welche jeweils den Fehler zwischen der geschätzten Ankunftsrichtung und der theoretischen Ankunftsrichtung eines von einem Satelliten stammenden empfangenen Signals darstellt.

13. Kalibrierverfahren eines Satelliten-Navigationssignalempfängers nach einem der Ansprüche 6 bis 12, bei welchem

$$Q = \sum_{k=1}^{N_S} \mathbf{a}(\hat{\theta}_k, \hat{\varphi}_k)^H \mathbf{\Gamma}^H \mathbf{R}_k^{-1} \mathbf{\Gamma} \mathbf{a}(\hat{\theta}_k, \hat{\varphi}_k)$$

die Kostenfunktion Q durch die Beziehung angegeben wird, wobei $N_S$ die Anzahl der von unterschiedlichen Satelliten stammenden empfangenen Signale ist, $R_k^{-1}$ die Inverse der räumlichen Interkorrelationsmatrix ist, $\Gamma$ eine diagonale Matrix ist, deren Komponenten die komplexen Koeffizienten der Schmalband-Ausgleichsfilter auf einem jeden Empfangskanal sind, und H der transponierte, konjugierte Operator ist.

14. Navigationssignalempfänger, beinhaltend eine Vielzahl von Empfangskanälen, welche jeweils eine Empfangsantenne (A1,A2..An), eine Vielzahl von Korrelatoren (C11, C12,..Cn1, Cn2) zum Korrelieren des durch die Antenne empfangenen Signals mit einem lokalen mit parametrierbarer Verzögerung verzögerten Code und einen Breitband-Ausgleichsfilter (FIR1, FIR2,..FIRn) beinhaltet, angeordnet zwischen der Empfangsantenne und den Korrelatoren, und erzielt durch die Ausführung des Kalibrierverfahrens nach einem der Ansprüche 1 bis 5.

15. Navigationssignalempfänger nach Anspruch 14, zudem beinhaltend, auf jedem Empfangskanal, einen Schmalband-Ausgleichsfilter (G1, G2...Gn) mit einem komplexen Koeffizienten, welcher zwischen dem Ausgang des Breitband-Ausgleichsfilters und dem Eingang der Korrelatoren angeordnet ist und durch Ausführung des Kalibrierverfahrens nach einem der Ansprüche 6 bis 13 erzielt wird.

16. Navigationssignalempfänger nach Anspruch 15, zudem beinhaltend, auf jedem Empfangskanal, mindestens eine Verzögerungsleitung (R11m, R111, R12m, R121...Rn1m, Rn11, Rn2m, Rn21), welche mit dem Ausgang der Korrelatoren angeschlossen ist.

17. Computerprogramm, beinhaltend Anweisungen zur Ausführung des Kalibrierverfahrens eines Navigationssignalempfängers nach einem der Ansprüche 1 bis 13, wenn das Programm von einem Prozessor ausgeführt wird.

**Claims**

1. A method for calibrating a satellite navigation signal receiver, said receiver comprising a plurality of reception channels each comprising a reception antenna (A1, A2,...An) and a plurality of correlators (C11, C12,...Cn1, Cn2) for correlating the signal received by the antenna with a local code delayed by a parametrizable delay, said calibration method comprising determining, by a processor, at least one broadband equalisation filter (FIR1, FIR2,...FIRn) intended to be applied between the reception antenna and the correlators of each reception channel, said broadband equalisation filters being obtained by the following steps:

- constructing (201), for each reception channel, a correlation vector comprising the correlation points simultaneously obtained at the output from said correlators;
- determining (205), on the basis of the correlation function of the local code with the received signal, which function is estimated, for each reception channel, on the basis of the correlation vectors, the reception channel, called reference channel, for which the received signal has the longest delay with respect to the local code;
- determining (206), for each reception channel other than the reference channel, the broadband equalisation filter by computing the deconvolution of the correlation vector of said reception channel by the correlation vector of the reference channel.

2. The method for calibrating a satellite navigation signal receiver as claimed in claim 1, previously comprising searching for and retaining (202) those signals, from among the signals received by said receiver and originating from a plurality of satellites, that are not affected by the presence of multiple paths of the signal, and selecting a signal from among those that are retained.

3. The method for calibrating a satellite navigation signal receiver as claimed in claim 2, comprising searching for and selecting (203) the signal, from among the retained signals, that is transmitted by the satellite having the highest elevation from among the satellites transmitting the signals received by said receiver.

4. The method for calibrating a satellite navigation signal receiver as claimed in claim 2, comprising searching for and selecting (204) the signal, from among the retained signals, that has the highest signal-to-noise ratio.

5. The method for calibrating a satellite navigation signal receiver as claimed in any one of the preceding claims, comprising a step of filtering the outputs of said correlators in order to decrease the measurement noise.

6. The method for calibrating a satellite navigation signal receiver as claimed in any one of the preceding claims, comprising determining a narrowband equalisation filter ($G_1$, $G_2$,...$G_n$) comprising a complex coefficient intended to be applied to the signal filtered by the broadband equalisation filter (FIR1, FIR2,...FIRn) on each reception channel, said narrowband equalisation filter being obtained by the following steps:

- filtering, for each received signal originating from a separate satellite and for each reception channel, the correlation vector using the broadband equalisation filter;
- determining (303), for each received signal originating from a separate satellite, a spatial intercorrelation matrix $R_k$ on the basis of the correlation vectors of each reception channel;
- determining (304), for each received signal originating from a separate satellite, the theoretical direction of arrival of the received signal on the basis of the position of the satellite;
- determining (305) a cost function Q representing the overall error between the estimated directions of arrival and the theoretical directions of arrival of the received signals, an estimated direction of arrival being determined on the basis of the spatial intercorrelation matrix $R_k$ and on the basis of the complex coefficient of the narrowband equalisation filter applied to the received signal;
- searching (306), for each reception channel, for the values of the complex coefficients that allow the cost function Q to be minimised.

7. A method for calibrating a satellite navigation signal receiver, said receiver comprising a plurality of reception channels each comprising a reception antenna (A1, A2,...An), a plurality of correlators (C11, C12,...Cn1, Cn2) for correlating the signal received by the antenna with a local code delayed by a parametrizable delay and a broadband equalisation filter (FIR1, FIR2,...FIRn), which is obtained by executing the calibration method as claimed in any one of claims 1 to 5 and is applied between the reception antenna and the correlators of each reception channel, said calibration method comprising determining a narrowband equalisation filter ($G_1$, $G_2$,...$G_n$) comprising a complex coefficient intended to be applied to the signal filtered by the broadband equalisation filter (FIR1, FIR2,...FIRn) on each reception channel, said narrowband equalisation filter being obtained by the following steps:

- determining (303), for each received signal originating from a separate satellite, a spatial intercorrelation matrix

$R_k$ on the basis of the correlation vectors of each reception channel;

• determining (304), for each received signal originating from a separate satellite, the theoretical direction of arrival of the received signal on the basis of the position of the satellite;

• determining (305) a cost function Q representing the overall error between the estimated directions of arrival and the theoretical directions of arrival of the received signals, an estimated direction of arrival being determined on the basis of the spatial intercorrelation matrix $R_k$ and on the basis of the complex coefficient of the narrowband equalisation filter applied to the received signal;

• searching (306), for each reception channel, for the values of the complex coefficients that allow the cost function Q to be minimised.

8. The method for calibrating a satellite navigation signal receiver as claimed in any one of claims 6 to 7, wherein the spatial intercorrelation matrix $R_k$ is averaged over a plurality of consecutive instants.

9. The method for calibrating a satellite navigation signal receiver as claimed in any one of claims 6 to 8, wherein the directions of arrival of the received signals are transposed to a reference frame linked to the reception antennae on the basis of the attitude of the receiver.

10. The method for calibrating a satellite navigation signal receiver as claimed in claim 9, wherein the attitude of the receiver is integrated as a parameter of the cost function Q and the method further comprises searching (306) for the value of the attitude of the receiver that allows the cost function Q to be minimised.

11. The method for calibrating a satellite navigation signal receiver as claimed in any one of claims 6 to 10, wherein the cost function Q depends on the direction vectors $a(\hat{\theta}_k, \hat{\varphi}_k)$ of the reception antennae of the receiver that are computed in the theoretical directions of arrival of the received signals.

12. The method for calibrating a satellite navigation signal receiver as claimed in any one of claims 6 to 11, wherein the cost function Q is obtained by summing a plurality of cost functions, each representing the error between the estimated direction of arrival and the theoretical direction of arrival of a received signal originating from a satellite.

13. The method for calibrating a satellite navigation signal receiver as claimed in any one of claims 6 to 12, wherein the cost function Q is provided by the relation $Q = \sum_{k=1}^{Ns} \mathbf{a}(\hat{\theta}_k, \hat{\varphi}_k)^H \Gamma^H \mathbf{R}_k^{-1} \Gamma . \mathbf{a}(\hat{\theta}_k, \hat{\varphi}_k)$ , where Ns is the number of received signals originating from separate satellites, $R_k^{-1}$ is the inverse of the spatial intercorrelation matrix, $\Gamma$ is a diagonal matrix, the components of which are the complex coefficients of the narrowband equalisation filters on each reception channel, and $^H$ is the conjugate transposed operator.

14. A satellite navigation signal receiver comprising a plurality of reception channels each comprising a reception antenna (A1, A2,...An), a plurality of correlators (C11, C12,...Cn1, Cn2) for correlating the signal received by the antenna with a local code delayed by a parametrizable delay and a broadband equalisation filter (FIR1, FIR2,...FIRn) disposed between the reception antenna and said correlators and obtained by executing the calibration method as claimed in any one of claims 1 to 5.

15. The satellite navigation signal receiver as claimed in claim 14, further comprising, on each reception channel, a narrowband equalisation filter ($G_1, G_2,...G_n$) with a complex coefficient, disposed between the output of the broadband equalisation filter and the input of said correlators and obtained by executing the calibration method as claimed in any one of claims 6 to 13.

16. The satellite navigation signal receiver as claimed in claim 15, further comprising, on each reception channel, at least one delay line (R11m, R111, R12m, R121,...Rn1m, Rn11, Rn2m, Rn21) connected to the output of said correlators.

17. A computer program comprising instructions for executing the method for calibrating a satellite navigation signal receiver as claimed in any one of claims 1 to 13, when the program is executed by a processor.

FIG.1

EP 3 203 267 B1

FIG.2

FIG.3

FIG.4

$c(t-\hat{\tau})\times\exp(-2j\pi.\hat{v}.t)$

C11

$c(t-\hat{\tau}-2T_e)\times\exp(-2j\pi.\hat{v}.t)$

R11m

R111

R12m

C12

R121

$c(t-\hat{\tau})\times\exp(-2j\pi.\hat{v}.t)$

Cn1

$c(t-\hat{\tau}-2T_e)\times\exp(-2j\pi.\hat{v}.t)$

Rn1m

Rn1

Rn2m

Rn21

Cn2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 805510 A
- US 5525997 A
- US 7304605 B
- WO 2012025306 A

**Littérature non-brevet citée dans la description**

- **M. PETOVELLO.** Carrier-to-Noise Algorithms. *Inside GNSS,* Janvier 2010, 20-27